# EUROPEAN PATENT APPLICATION

(11) **EP 4 614 710 A1**
(43) Date of publication of application: **10.09.2025**
(21) Application number: 23894974.7
(22) Date of filing: 20.11.2023
(51) Int. Cl.: H01M 50/383, H01M 50/24, H01M 50/211, H01M 50/249

(54) **END PLATE PREVENTING HEAT PROPAGATION**

(30) Priority: 21.11.2022 KR 20220156396
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR); JANG, Sunghwan, Daejeon 34122 (KR); PARK, Minsoo, Daejeon 34122 (KR); KIM, Kwangmo, Daejeon 34122 (KR)
(74) Representative: Plasseraud IP
(86) International application number: PCT/KR2023/018709
(87) International publication number: WO 2024/112046

(57) **Abstract**

The present invention provides a structure of an end plate covering a lengthwise end of a battery module, the end plate including: a first plate provided with a first hole perforating therethrough in lengthwise direction; a second plate including a main body and a fastening part protruding outward from the main body in lengthwise direction, the second plate provided inner than the first plate in lengthwise direction; and a thermal expansion member including a thermally expandable material, wherein the fastening part penetrates the first hole to fasten the first plate and the main body, and the thermal expansion member expands in volume during thermal runaway of the battery module.

## Description

### [TECHNICAL FIELD]

This application claims the benefit of priority based on Korean Patent Application No. 10-2022-0156396 filed on November 21, 2022, entire content disclosed in the document of the patent applications is included as a part of this specification.

The present invention relates to an end plate covering the front and rear of a battery module manufactured by integrating pouch-type battery cells capable of delaying or preventing heat propagation during thermal runaway.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large-sized devices such as vehicles require high output and large capacity. Therefore, a medium to large-sized battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium to large-sized battery modules.

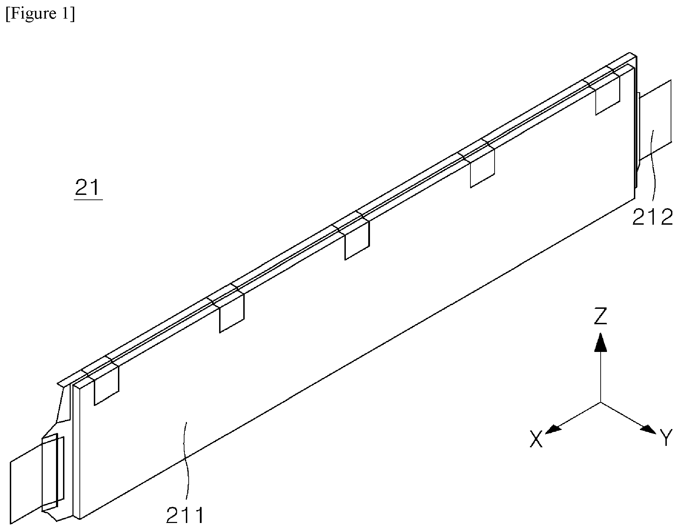

FIG. 1 is a perspective view of a battery cell. Referring to FIG. 1, a general pouch-type battery cell 21 includes an electrode assembly formed by stacking a plurality of anodes and a plurality of cathodes with separators interposed therebetween, a pouch 211 accommodating and sealing the electrode assembly, and an electrode lead 212 extending from and protruding out of the pouch 211. A plurality of the battery cells 21 may be stacked to form a battery cell laminate, and the battery cell laminate may constitute a single battery module.

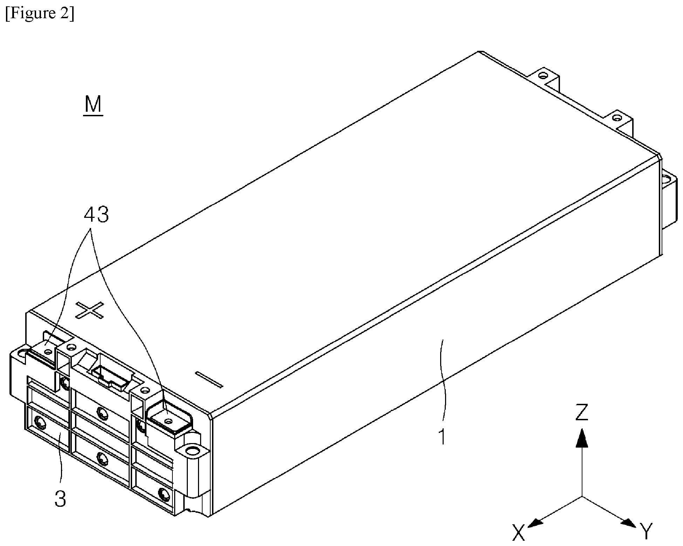

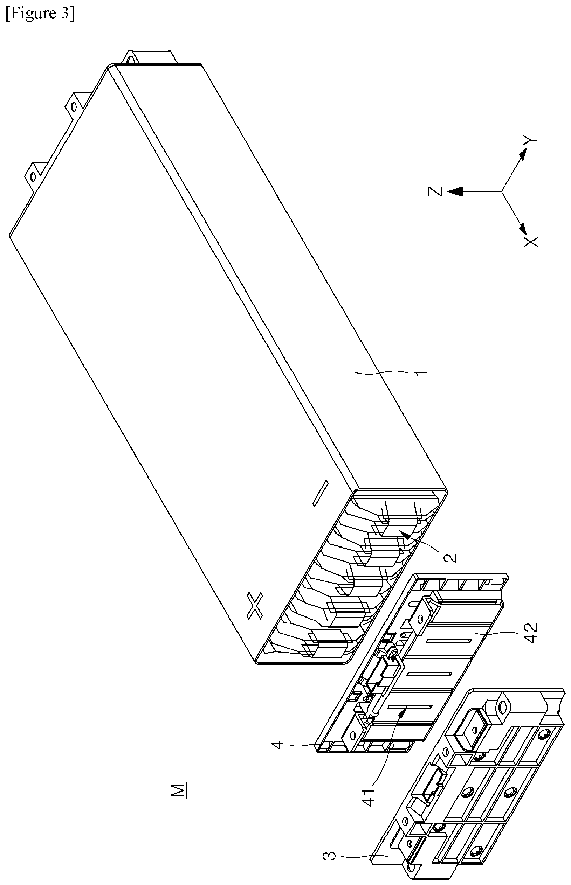

FIGS. 2 and 3 are perspective and exploded perspective views illustrating a structure of a battery module. Referring to FIGS. 2 and 3, a battery module M includes a battery cell laminate 2, a pair of bus bar frames 4 connected to the front and rear of the battery cell laminate 2, respectively, and a frame 1 having open front and rear ends and accommodating the battery cell laminate, and a pair of end plates 3 covering the front and rear ends of the frame 1, respectively.

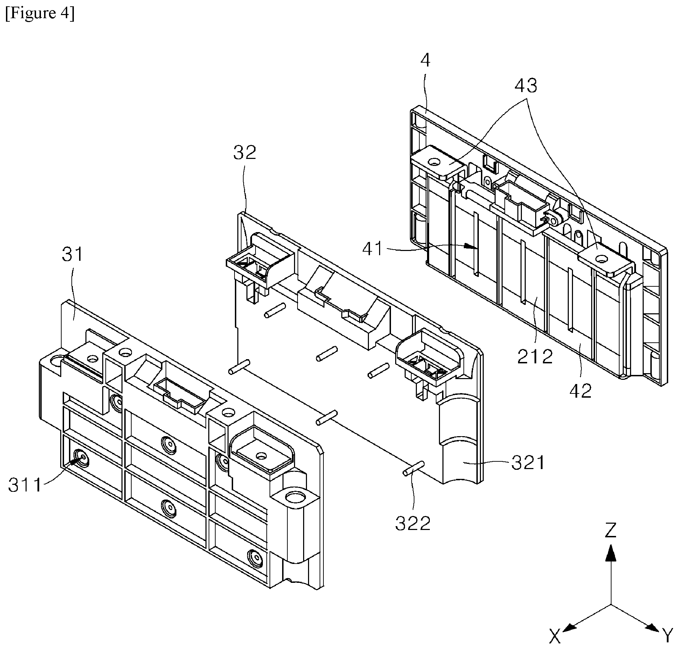

FIG. 4 is an exploded perspective view illustrating structures and fastening relationship of an end plate and a bus bar frame. Referring to FIG. 4, the electrode leads 212 protruding from the battery cell laminate 2 in forward and reverse directions pass through slit 41 provided on the bus bar frames 4 and is welded to the bus bar 42. The bus bar 42 connects the electrode leads 212 to the terminal 43 in parallel or in series. The terminal 43 is exposed to the outside through an opening provided in the end plate 3 and allows the battery cell laminate 2 to be connected to the outside.

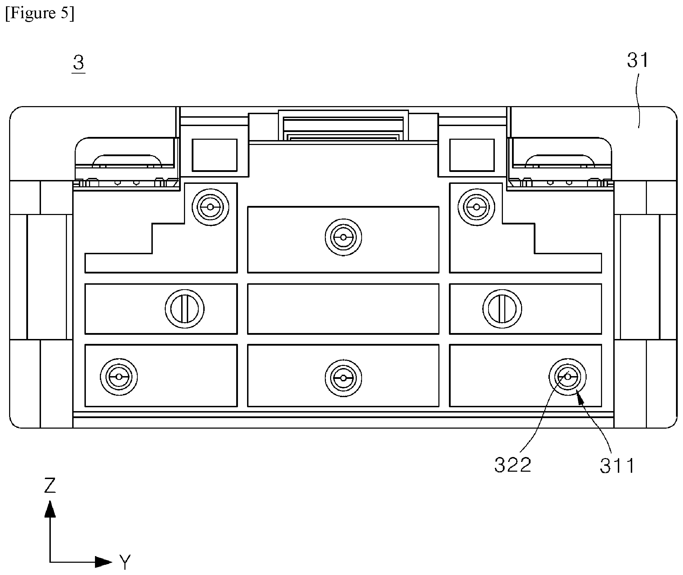

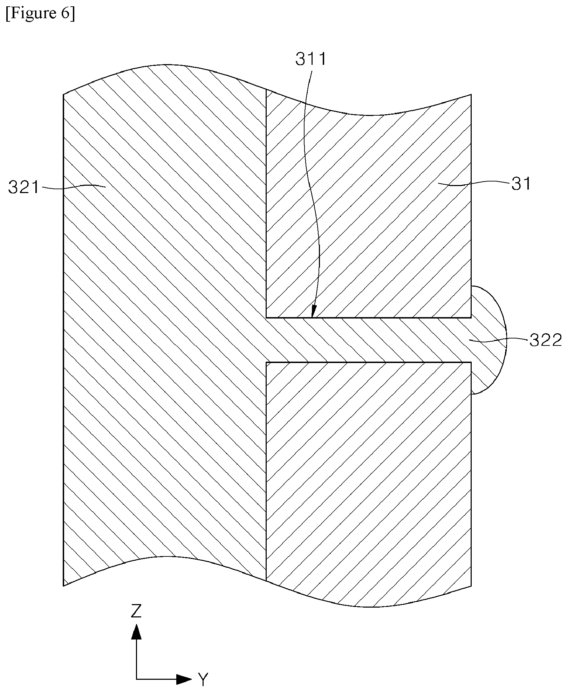

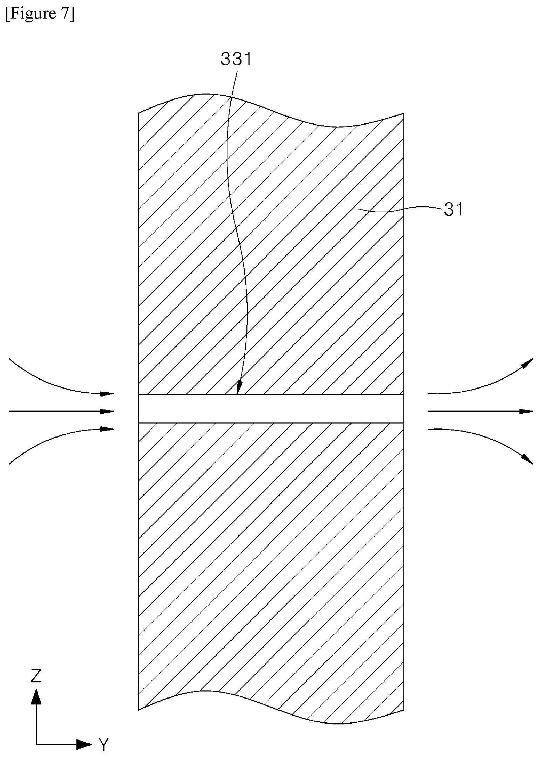

FIG. 5 is a front view of an end plate, FIG. 6 is an enlarged cross-sectional view illustrating an area where a first hole is provided in the end plate, and FIG. 7 is an enlarged cross-sectional view illustrating an occurrence of thermal runaway in the area shown FIG. 6. Referring to FIG. 4 to 7, the end plate 3 may be manufactured by coupling a first plate 31 made of metal material to cover the front and rear ends of the frame 1, and a second plate 31 made of synthetic resin injection-molded for insulation. The first plate 31 is provided with a first hole 311, and the second plate 32 includes a main body 321 and a fastening part 322 which penetrates the first hole 311 and welded to couple the first plate 31 and the main body 321. When thermal runaway occurs in the battery module M, the second plate 32 made of synthetic resin may be melted by heat, and as a result, the first hole 311 is opened, and the battery module M causing heat energy, gas and flame to be discharged from the inside to the outside through the first hole 311.

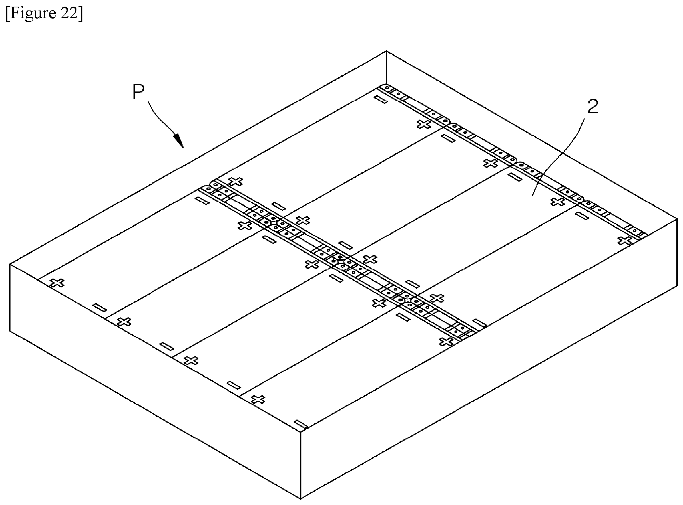

FIG. 22 is a perspective view illustrating a battery pack including a battery module. Referring to FIG. 22, a plurality of the battery modules M may be accommodated in a single frame to form a battery pack P. Here, the battery modules M are arranged adjacent to each other with the end plates 3 where the terminals 43 are exposed. Therefore, during thermal runaway of the battery module M, heat energy, gas and flame discharged through the first hole 311 may spread to neighboring battery modules, thereby causing serial ignition.

### [DISCLOSURE]

### [TECHNICAL PROBLEM]

In order to solve above-described problems of prior art, it is an object of the present invention to provide a structure of an end plate capable of preventing heat energy, gas and flame generated during thermal runaway of a battery module from being discharged toward the end plate.

It is another object of the present invention to provide a structure of an end plate capable of economically delaying or preventing serial ignition between battery modules in a battery pack without significantly changing the structure of the existing battery module.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above problem, the present invention provides a structure of an end plate covering a lengthwise end of a battery module, the end plate including: a first plate provided with a first hole perforating therethrough in lengthwise direction; a second plate including a main body and a fastening part protruding from the main body in lengthwise direction, the second plate provided inner than the first plate in lengthwise direction; and a thermal expansion member including a thermally expandable material, wherein the fastening part penetrates the first hole to fasten the first plate and the main body, and the thermal expansion member expands in volume during thermal runaway of the battery module.

The fastening part may include a material melting during thermal runaway of the battery module. For example, the fastening part may include a synthetic resin material. Specifically, the fastening part may be welded after penetrating the first hole such that the lengthwise end thereof extends radially outward to fasten the first plate to the main body.

The thermal expansion member may include a second hole penetrated by the fastening part.

In one embodiment of the present invention, the fastening part may penetrate the first hole while inserted in the thermal expansion member, and accordingly, the thermal expansion member may be interposed between the outer circumferential surface of the fastening part and the inner circumferential surface of the first hole.

In one embodiment of the present invention, the thermal expansion member extending in lengthwise direction of the first hole may be provided in a manner that an outer circumferential surface thereof corresponds to the inner circumferential surface of the first hole and an inner circumferential surface thereof corresponds to the outer circumferential surface of the fastening part. That is, the outer diameter of the thermal expansion member may be equal to the diameter of the first hole, the inner diameter of the thermal expansion member may be equal to the diameter of the fastening part, and the length of the thermal expansion member may be equal to that of the first hole.

In a modified example of one embodiment of the present invention, the first hole may include a groove at a lengthwise inner end thereof. The inner diameter of the groove may be larger than that of a portion of the first hole other than the lengthwise inner end thereof. That is, the groove may be recessed radially outward with respect to the other portion of the first hole.

In a first modified example, the thermal expansion member extending in lengthwise direction of the groove may be provided in a manner that an outer circumferential surface thereof corresponds to the inner circumferential surface of the groove and an inner circumferential surface thereof corresponds to the outer circumferential surface of the fastening part. That is, the outer diameter of the thermal expansion member may be equal to the inner diameter of the groove, the inner diameter of the thermal expansion member may be equal to the diameter of the fastening part, and the length of the thermal expansion member may be equal to that of the groove.

Alternatively, in a second modified example, the thermal expansion member may include: an insert portion and an insert interference part. The insert portion extending in lengthwise direction of the first hole may be provided in a manner that the outer circumferential surface thereof corresponds to the inner circumferential surface of the first hole and the inner circumferential surface thereof corresponds to the outer circumferential surface of the fastening part, and the insert interference part extending in lengthwise direction of the groove may be provided in a manner that the outer circumferential surface thereof corresponds to the inner circumferential surface of the groove and the inner circumferential surface thereof corresponds to the outer circumferential surface of the fastening part.

In another embodiment of the present invention, the end plate may further include a flame retardant plate the first plate and the second plate along lengthwise direction. A third hole extending in lengthwise direction may be provided at the flame retardant plate. The fastening part may sequentially penetrate the third hole and the first hole to fasten the first plate, the flame retardant plate and the main body.

The fastening part may penetrate the third hole while inserted in the thermal expansion member, and thus the thermal expansion member may be interposed between the outer circumferential surface of the fastening part and the inner circumferential surface of the third hole.

In another embodiment of the present invention, the diameter of the third hole may be larger than that of first hole. Here, the thermal expansion member may extend in lengthwise direction of the third hole in a manner that an outer circumferential surface thereof corresponds to the inner circumferential surface of the third hole and the inner circumferential surface thereof corresponds to the outer circumferential surface of the fastening part. That is, the outer diameter of the thermal expansion member may be equal to the diameter of the third hole, the inner diameter of the thermal expansion member may be equal to the outer diameter of the fastening part, and the length of the thermal expansion member may be equal to the length of the third hole.

In a modified example of another embodiment of the present invention, the thermal expansion member may be interposed between the outer circumferential surface of the fastening part and the inner circumferential surface of the first hole.

In the first modified example, the first hole and the second hole may have the same inner diameter. Here, the thermal expansion member may extends in lengthwise direction of the first hole and the third hole in a manner that an outer circumferential surface thereof corresponds to the inner circumferential surfaces of the first hole and the third hole and an inner circumferential surface thereof corresponds to the outer circumferential surface of the fastening part. That is, the outer diameter of the thermal expansion member may be equal to the diameters of the first hole and the third hole, the inner diameter of the thermal expansion member may be equal to the outer diameters of the fastening part, and the length of the thermal expansion member may be equal to the lengths of the first hole and the third hole.

In the second modified example, the diameter of the third hole may be larger than that of the first hole. Here, the thermal expansion member may include an insert portion extending and an insert interference part. The insert portion extending in lengthwise direction of the first hole may be provided in a manner that the outer circumferential surface thereof corresponds to the inner circumferential surface of the first hole and the inner circumferential surface thereof corresponds to the outer circumferential surface of the fastening part, and the insert interference part extending in lengthwise direction of the third hole may be provided in a manner that the outer circumferential surface thereof corresponds to the inner circumferential surface of the third hole and the inner circumferential surface thereof corresponds to the outer circumferential surface of the fastening part.

The flame retardant plate may include an electrically insulating material. That is, the flame retardant plate may include a material with flame retardant and electrically insulating properties.

The thermal expansion member may include a material selected from a group consisting of soft urethane, hard urethane, hard polyurethane and phosphorus-based flame retardant material.

The present invention provides a structure of a battery module including the end plate, a battery pack including the battery module, and a vehicle including the battery pack.

### [ADVANTTAGEOUS EFFECTS]

The present invention provides a structure of an end plate capable of preventing heat energy, gas and flame from being discharged thereto by the thermal expansion member expanding to close the first hole and second hole despite melting of the second plate during thermal runaway of the battery module.

The present invention is advantageous in that the present invention may be embodied simply by adding a thermal expansion member without significantly changing the structure of conventional battery module.

**In** addition, the present invention provides a structure of an endplate capable of accurately guiding the insertion position of the thermal expansion member by including an insert interference part.

In addition, the flame retardant plate according to the present invention is capable of suppressing ignition caused by additional short circuit by effectively insulating between the end plate and the bus bar frame even when the second plate is melted due to thermal runaway.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 is a perspective view of a battery cell.
FIGS. 2 and 3 are perspective and exploded perspective views illustrating a structure of a battery module.
FIG. 4 is an exploded perspective view illustrating structures and fastening relationship of an end plate and a bus bar frame.
FIG. 5 is a front view of an end plate, FIG. 6 is an enlarged cross-sectional view illustrating an area where a first hole is provided in the end plate, and FIG. 7 is an enlarged cross-sectional view illustrating an occurrence of thermal runaway in the area shown FIG. 6.
FIG. 8 is an exploded perspective view illustrating a structure of an end plate according to a first embodiment of the present invention.
FIG. 9 is an enlarged cross-sectional view illustrating an area where a first hole is provided in the end plate according to the first embodiment of the present invention, and FIG. 10 is an enlarged cross-sectional view illustrating an occurrence of thermal runaway in the area shown FIG. 9.
FIG. 11 is an enlarged cross-sectional view illustrating an area where a first hole of an end plate is provided according to a first modified example of the first embodiment of the present invention, and FIG. 12 is an enlarged cross-sectional view illustrating thermal runaway occurring in the area shown FIG. 11.
FIG. 13 is an enlarged cross-sectional view illustrating an area where a first hole of an end plate is provided according to a second modified example of the first embodiment of the present invention, and FIG. 14 is an enlarged cross-sectional view illustrating thermal runaway occurring in the area shown in FIG. 13.
FIG. 15 is an exploded perspective view illustrating a structure of an end plate according to a second embodiment of the present invention.
FIG. 16 is an enlarged cross-sectional view illustrating an area where a first hole is provided in the end plate according to the second embodiment of the present invention, and FIG. 17 is an enlarged cross-sectional view illustrating thermal runaway occurring in the area shown in FIG. 16.
FIG. 18 is an enlarged cross-sectional view illustrating an area where a first hole of an end plate is provided according to a first modified example of the second embodiment of the present invention, and FIG. 19 is an enlarged cross-sectional view illustrating thermal runaway occurring in the area shown in FIG. 18.
FIG. 20 is an enlarged cross-sectional view illustrating an area where a first hole of the end plate is provided according to a second modified example of the second embodiment of the present invention, and FIG. 21 is an enlarged cross-sectional view illustrating thermal runaway occurring in the area shown in FIG. 20.
FIGS. 22 and 23 are perspective views illustrating a battery pack including a battery module and a vehicle including the battery pack, respectively.

### [DESCRIPTION OF REFERENCE NUMERALS]

M: battery module
1: frame
2: battery cell laminate
   21: battery cell
   211: pouch
   212: electrode lead
4: bus bar frame
   41: slit
   42: bus bar
   43: terminal
3: end plate
   31: first plate
      311: first hole
      312: groove
   32: second plate
      321: main body
      322: fastening part
   33: thermal expansion member
      331: second hole
      332: insert portion
      333: insert interference part
   34: flame retardant plate
      341: third hole
P: battery pack
V: vehicle
X: lengthwise direction
Y: thicknesswise direction/widthwise direction
Z: heightwise direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

FIGS. 2 and 3 are perspective and exploded perspective views illustrating the structure of the battery module. Referring to FIGS. 2 and 3, in order to solve the above-described problems, the present invention provides an end plate 3 covering a lengthwise end of a battery module, the end plate including: a first plate provided with a first hole perforating therethrough in lengthwise direction; a second plate including a main body and a fastening part protruding from the main body in lengthwise direction, the second plate provided inner than the first plate in lengthwise direction; and a thermal expansion member including a thermally expandable material, wherein the fastening part penetrates the first hole to fasten the first plate and the main body, and the thermal expansion member expands in volume during thermal runaway of the battery module.

The present invention may be applied to an end plate constituted by two plates fastened to each other by welding a rivet rod made of synthetic resin provided in one plate and penetrating a through-hole provided in the other plate. However, in general, the present invention may be applied to any cover or housing of a battery provided with a hole normally blocked by a member but opens when the member melts due to thermal runaway, which will be understood by the description given below.

Hereinafter, a preferred embodiment of the present invention will be described with reference to the accompanying drawings.

### [FIRST EMBODIMENT]

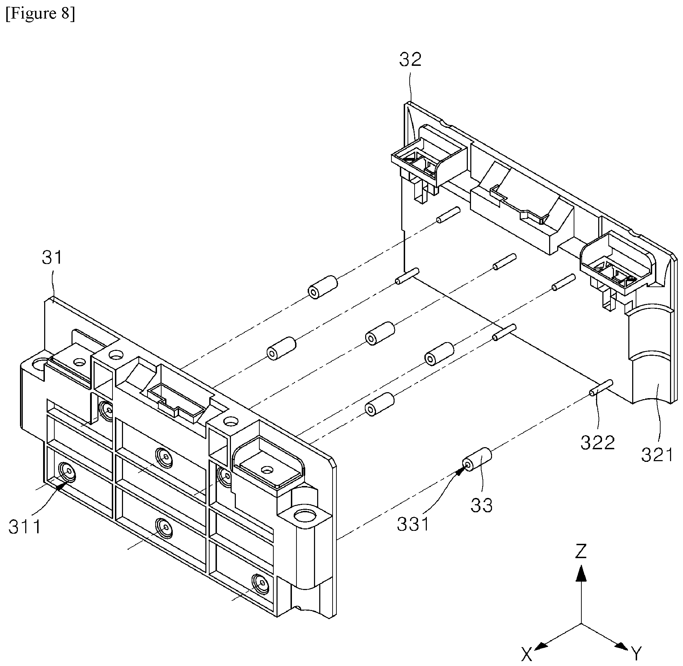

FIG. 8 is an exploded perspective view illustrating a structure of an end plate according to a first embodiment of the present invention. Referring to FIG. 8, the end plate 3 according to the first embodiment may include a first plate 31, a second plate 32 and a thermal expansion member 33.

The first plate 31 may be provided with a first hole 311 perforating therethrough in lengthwise direction. A plurality of first holes 311 may be provided.

The second plate 32 may include a main body 321 and a fastening part 322 protruding outward from the main body 321 in lengthwise direction. The second plate 32 may be provided inner than the first plate 31 in lengthwise direction.

The fastening part 322 may penetrate the first hole 311 to fasten the first plate 31 and the main body 321. The fastening part 322 may include a material melting during thermal runaway of the battery module. For example, the fastening part 322 may include a thermoplastic synthetic resin material. Here, the entirety of the second plate 32 including the main body 321 and the fastening part 322 may be made of synthetic resin material for insulation between the inside of the battery module and the first plate 31.

The fastening part 322 may include a welding rivet fastening the first plate 31 and the main body 321 to each other outside of the first plate 31 by the lengthwise outer end thereof being melted after penetrating the first hole 311 in lengthwise direction to expand radially outward.

The thermal expansion member 33 may include a thermally expandable material. Accordingly, the volume of the thermal expansion member 33 may expand during thermal runaway of the battery module.

The thermal expansion member 33 may include a second hole 331 penetrated by the fastening part 322
In the embodiment, the fastening part 322 may penetrate the first hole 311 while inserted in the thermal expansion member 33, and thus the thermal expansion member 33 may be interposed between the outer circumferential surface of the fastening part 322 and the inner circumferential surface of the first hole 311.

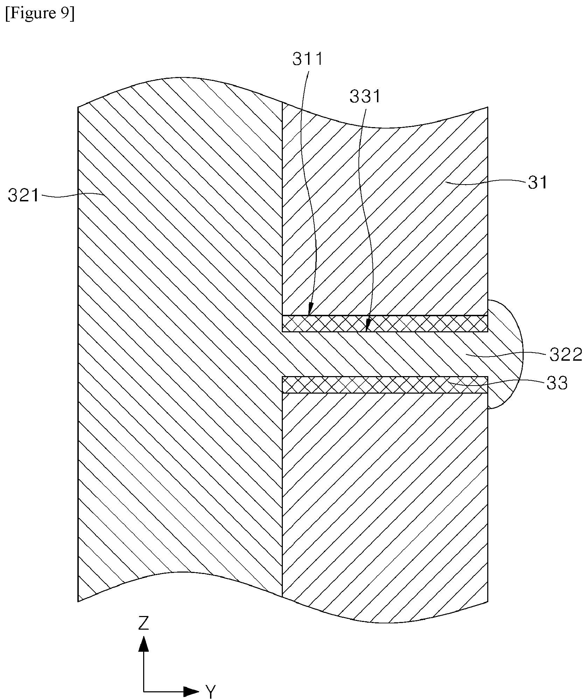

FIG. 9 is an enlarged cross-sectional view illustrating an area where a first hole is provided in the end plate according to the first embodiment of the present invention. Referring to FIG. 9, the thermal expansion member 33 according to the first embodiment extending in lengthwise direction of the first hole 311 may be provided in a manner that the outer circumferential surface thereof corresponds to the inner circumferential surface of the first hole 311 and the inner circumferential surface thereof corresponds to the outer circumferential surface of the fastening part 322. That is, the outer diameter of the thermal expansion member 33 may be equal to the diameter of the first hole 311, the inner diameter of the thermal expansion member 33 may be equal to the diameter of the fastening part 322, and the length of the thermal expansion member 33 may be equal to that of the first hole 311.

The end plate 3 of the present invention may include: the first plate 31 provided with the first hole 311 extending in lengthwise direction; the second plate 32 provided inner than the first plate 31 in lengthwise direction and including the main body 321 and the fastening part 322 protruding outward from the main body 321 in lengthwise direction and welded after penetrating the first hole 311 to fasten the first plate 31 and the main body 321 to each other; and the thermal expansion member 33 provided with the second hole 331 penetrated by the fastening part 322 in lengthwise direction in a manner that the outer circumferential surface thereof corresponds to the inner circumferential surface of the first hole 311 and the inner circumferential surface thereof corresponds to the outer circumferential surface of the fastening part 322 to be interposed between the outer circumferential surface of the fastening part 322 and the inner circumferential surface of the first hole 311.

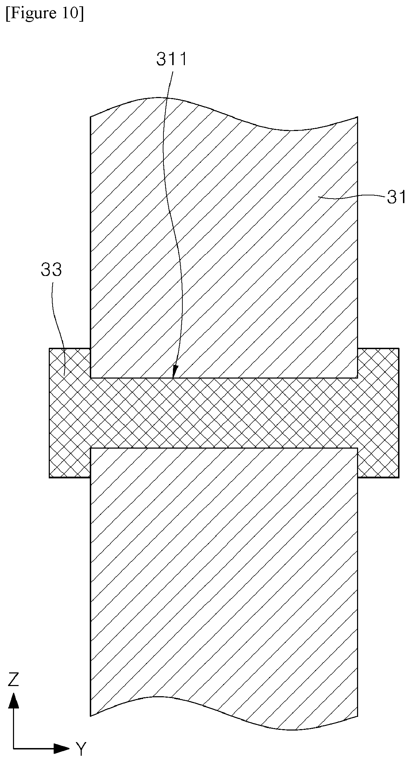

FIG. 10 is an enlarged cross-sectional view illustrating an occurrence of thermal runaway in the area shown FIG. 9. Referring to FIG. 10, during thermal runaway of the battery module, the fastening part 322 may melt, which may cause heat energy, gas and flame within the battery module to be discharged through the first hole 311 to the outside and to neighboring battery modules such that there is a risk of heat propagation and serial ignition between modules. Here, the thermal expansion member 33 may expand to close the first hole 311, thereby effectively preventing heat energy, gas and flame inside the battery module from being discharged through the first hole 311.

The present invention according to the first embodiment is advantageous in that the above-described effect is obtained simply by leaving the first hole 311 as is or by slightly enlarging the inner diameter thereof and inserting the fastening part 322 into the first hole 311 covered with the thermal expansion member 33.

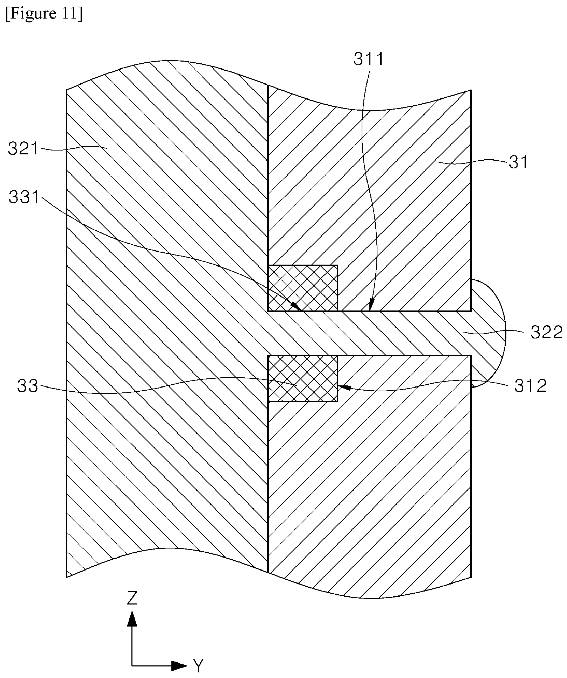

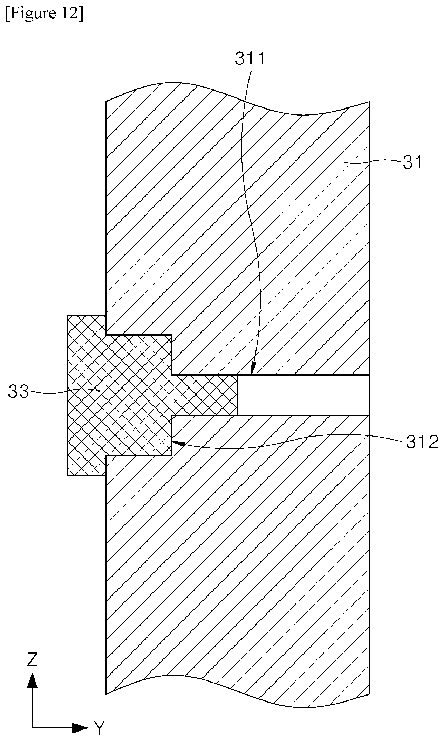

FIG. 11 is an enlarged cross-sectional view illustrating an area where a first hole of an end plate is provided according to a first modified example of the first embodiment of the present invention, and FIG. 12 is an enlarged cross-sectional view illustrating thermal runaway occurring in the area shown FIG. 11. Referring to FIGS. 11 and 12, the first hole 311 according to the first modified example and the second modified example of the first embodiment may include a groove 312 at a lengthwise inner end thereof. The inner diameter of the groove 312 may be larger than that of a portion of the first hole 311 other than the lengthwise inner end thereof. That is, the groove 312 may be recessed radially outward with respect to the other portion of the first hole 311.

In the first modified example, the thermal expansion member 33 extending in lengthwise direction of the groove 312 may be provided in a manner that an outer circumferential surface thereof corresponds to the inner circumferential surface of the groove 312 and the inner circumferential surface thereof corresponds to the outer circumferential surface of the fastening part 322. That is, the outer diameter of the thermal expansion member 33 may be equal to the inner diameter of the groove 312, the inner diameter of the thermal expansion member 33 may be equal to the diameter of the fastening part 322, and the length of the thermal expansion member 33 may be equal to that of the groove 312. According to the first modified example, it is possible to insert the thermal expansion member 33 simply by adding the groove 312 into the existing first plate 31 provided with the first hole 311, and it is economical since the length of the expansion member 33 can be short. In addition, according to the first modified example, the present invention is advantageous in manufacturing since there is a step at the boundary between the portion where the groove 312 is provided and other portions of the first hole 311, which limits the insertion depth of the thermal expansion member 33.

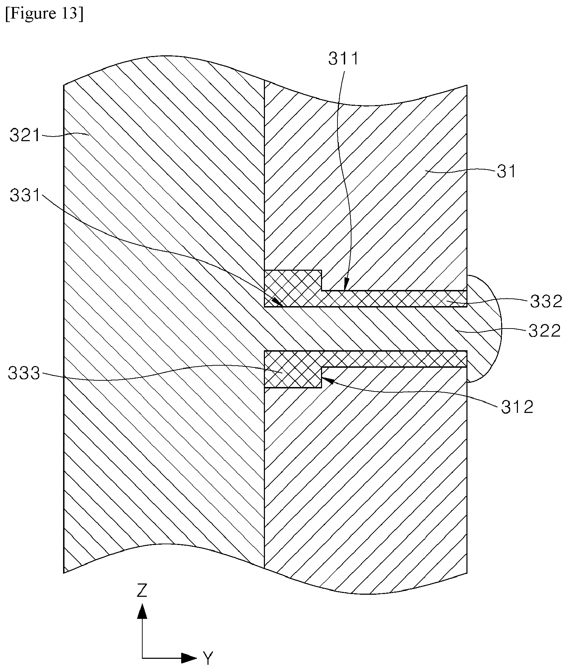

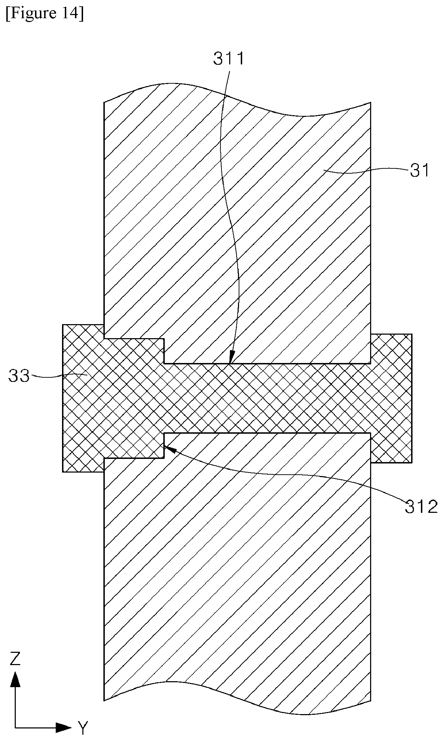

FIG. 13 is an enlarged cross-sectional view illustrating an area where a first hole of an end plate is provided according to a second modified example of the first embodiment of the present invention, and FIG. 14 is an enlarged cross-sectional view illustrating thermal runaway occurring in the area shown in FIG. 13. Referring to FIGS. 13 and 14, in the second modified example, the thermal expansion member 33 may include: an insert portion 332 and an insert interference part 333. The insert portion 332 extending in lengthwise direction of the first hole 311 may be provided in a manner that the outer circumferential surface thereof corresponds to the inner circumferential surface of the first hole 311 and the inner circumferential surface thereof corresponds to the outer circumferential surface of the fastening part 322, and the insert interference part 333 extending in lengthwise direction of the groove 312 may be provided in a manner that the outer circumferential surface thereof corresponds to the inner circumferential surface of the groove 312 and the inner circumferential surface thereof corresponds to the outer circumferential surface of the fastening part 322. According to the second modified example, the present invention is advantageous in manufacturing since the insertion depth of the thermal expansion member 33 is limited, and the first hole 311 can be closed more reliably in the event of thermal runaway since the thermal expansion member 33 is provided over the entirety of the first hole 311 in lengthwise direction.

### [SECOND EMBODIMENT]

Hereinafter, descriptions of portions that are not separately given in the second embodiment are the same as those of the first embodiment.

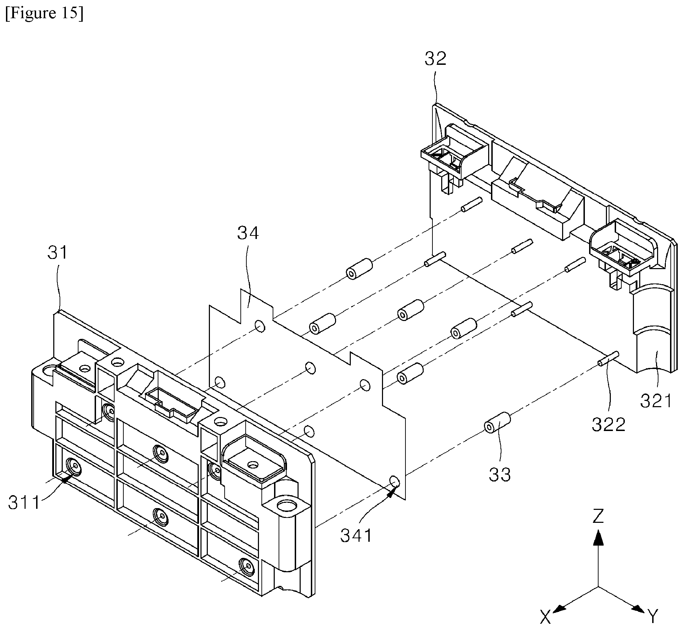

FIG. 15 is an exploded perspective view illustrating a structure of an end plate according to a second embodiment of the present invention. With reference to FIG. 15, the end plate 3 according to the second embodiment may further include a flame retardant plate 34 provided with a third hole 341 interposed between the first plate 31 and the second plate 32 along the lengthwise direction. The flame retardant plate 34 may be provided with a third hole 341 extending in lengthwise direction. The fastening part 322 may sequentially penetrate the third hole 341 and the first hole 311 to fasten the first plate 31, the flame retardant plate 34 and the main body 321.

The fastening part 322 may penetrate the third hole 341 while inserted in the thermal expansion member 33, and thus the thermal expansion member 33 may be interposed between the outer circumferential surface of the fastening part 322 and the inner circumferential surface of the third hole 341.

The flame retardant plate 34 may include an electrically insulating material. That is, the flame retardant plate 34 may include a material with flame retardant and electrically insulating properties. When the main body 321 melts during thermal runaway of the battery module, there is a risk of short circuiting between the inside of the battery module and the first plate 31. The flame retardant plate 34 may not melt even during thermal runaway since the same 34 is made of a flame retardant material, and the flame retardant plate 34 may also serve as a barrier with insulating properties between the inside of the battery module and the first plate 31 since the same includes a material with electrically insulating properties. As a result, the risk of short circuit due to thermal runaway of the battery module and additional ignition may be reduced.

The thermal expansion member 33 may include a material selected from a group consisting of soft urethane, hard urethane, hard polyurethane and phosphorus-based flame retardant material. However, the thermal expansion member 33 may include any material as long as the volume thereof expands during thermal runaway of the battery module.

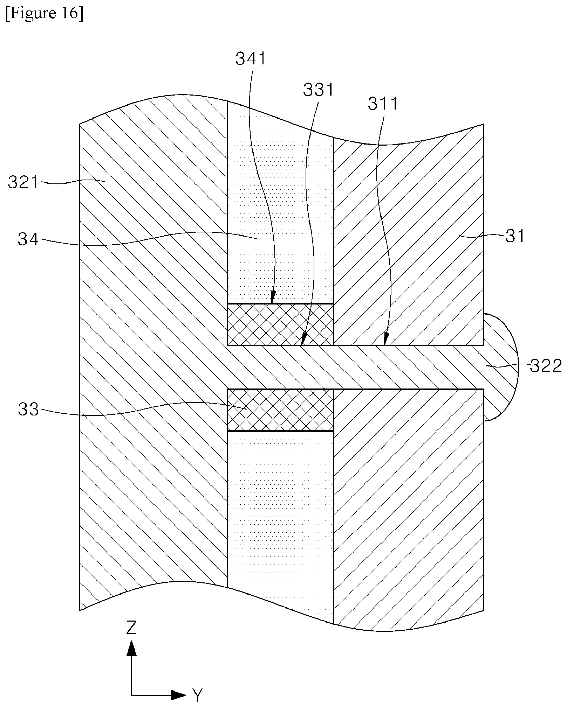

FIG. 16 is an enlarged cross-sectional view illustrating an area where a first hole is provided in the end plate according to the second embodiment of the present invention. Referring to FIG. 16, in the second embodiment, the diameter of the third hole 341 may be larger than that of the first hole 311. Here, the thermal expansion member 33 may extend in lengthwise direction of the third hole 341 in a manner that the outer circumferential surface thereof corresponds to the inner circumferential surface of the third hole 341 and the inner circumferential surface thereof corresponds to the outer circumferential surface of the fastening part 322. That is, the outer diameter of the thermal expansion member 33 may be equal to the inner diameter of the third hole 341, the inner diameter of the thermal expansion member 33 may be equal to the outer diameter of the fastening part 322, and the length of the thermal expansion member 33 may be equal to the length of the third hole 341.

The end plate 3 according to the second embodiment includes: the first plate 31 provided with the first hole 311 extending in lengthwise direction; the flame retardant plate 34 made of an electrically insulating material, the flame retardant plate 34 provided inner than the first plate 31 in lengthwise direction and provided with the third hole 341 extending in lengthwise direction; the second plate 32 provided inner than the first plate 31 in lengthwise direction and including the main body 321 and the fastening part 322 protruding outward from the main body 321 in lengthwise direction and welded after penetrating and the third hole 341 the first hole 311 to fasten the first plate 31, the flame retardant plate 34 and the main body 321 with one another; and the thermal expansion member 33 provided with the second hole 331 penetrated by the fastening part 322 in lengthwise direction in a manner that the outer circumferential surface thereof corresponds to the inner circumferential surface of the third hole 341 and the inner circumferential surface thereof corresponds to the outer circumferential surface of the fastening part 322 to be interposed between the outer circumferential surface of the fastening part 322 and the inner circumferential surface of the third hole 341.

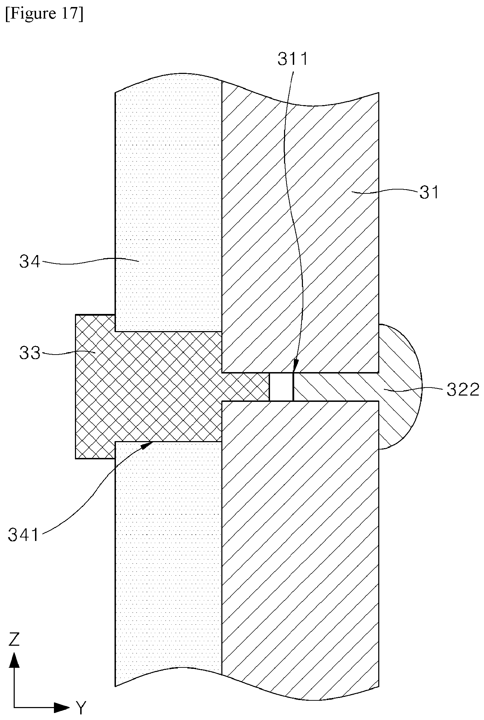

FIG. 17 is an enlarged cross-sectional view illustrating thermal runaway occurring in the area shown in FIG. 16. Referring to FIG. 17, during thermal runaway of the battery module, the fastening part 322 may melt, which may cause heat energy, gas and flame within the battery module to be discharged through the third hole 341 and the first hole 311 to the outside and to neighboring battery modules such that there is a risk of heat propagation and serial ignition between modules. Here, the thermal expansion member 33 may expand to close the third hole 341, thereby effectively preventing heat energy, gas and flame inside the battery module from being discharged through the first hole 311. Here, since the thermal expansion member 33 may completely close the third hole 341 even with the fastening part 322 partly remaining in the first hole 311, the first hole 311 may also remain closed despite the thermal expansion member 33 being provided only in the third hole 341.

The present invention according to the second embodiment is advantageous in that insulation is maintained even during thermal runaway due to the flame retardant plate 34, additional processing is not necessary for the first hole 311, and only a small amount of the thermal expansion member 33 is sufficient to close both the first hole 311 and the third hole 341.

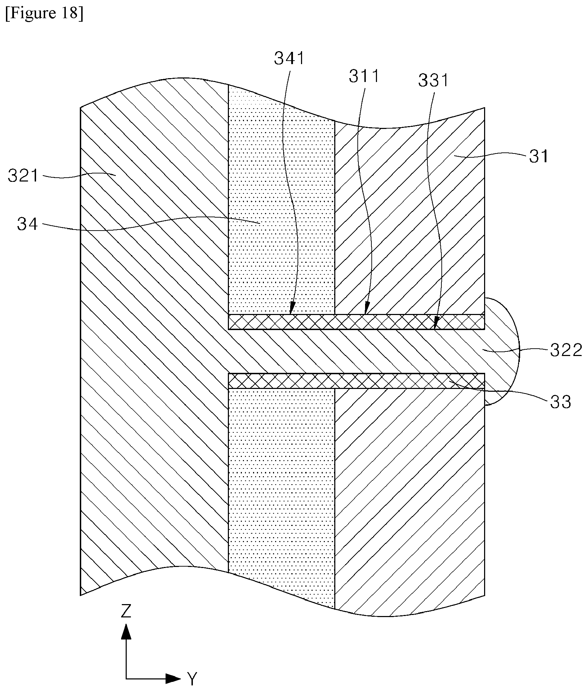

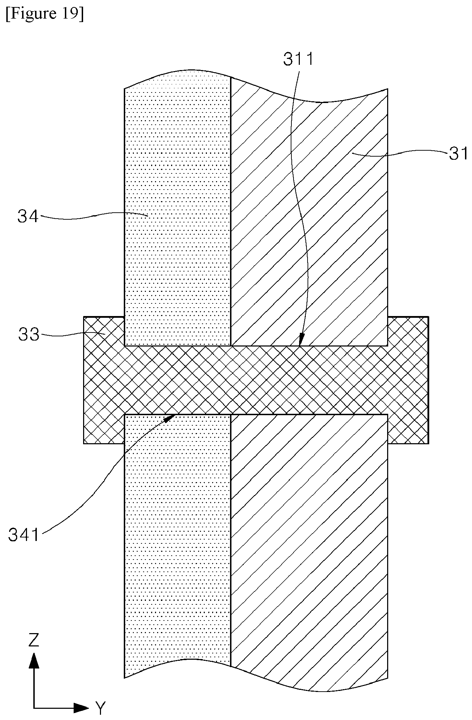

FIG. 18 is an enlarged cross-sectional view illustrating an area where a first hole of an end plate is provided according to a first modified example of the second embodiment of the present invention, and FIG. 19 is an enlarged cross-sectional view illustrating thermal runaway occurring in the area shown in FIG. 18. Referring to FIGS. 18 and 19, the thermal expansion member 33 according to the first modified example and the second modified example of the second embodiment may also be interposed between the outer circumferential surface of the fastening part 322 and the inner circumferential surface of the first hole 311.

In the first modified example, the first hole 311 and the second hole 331 may have the same inner diameter. Here, the thermal expansion member 33 may extends in lengthwise direction of the first hole 311 and the third hole 341 in a manner that the outer circumferential surface thereof corresponds to the inner circumferential surfaces of the first hole 311 and the third hole 341 and the inner circumferential surface thereof corresponds to the outer circumferential surface of the fastening part 322. That is, the outer diameter of the thermal expansion member 33 may be equal to the diameters of the first hole 311 and the third hole 341, the inner diameter of the thermal expansion member 33 may be equal to the outer diameters of the fastening part 322, and the length of the thermal expansion member 33 may be equal to the lengths of the first hole 311 and the third hole 341. According to the first modified example, it is advantageous that manufacturing of the first hole 311 and the third hole 341 are facilitated since the diameters of the first hole 311 and the third hole 341 are the same, and the third hole 341 and the first hole 311 may be reliably closed over the entire length thereof.

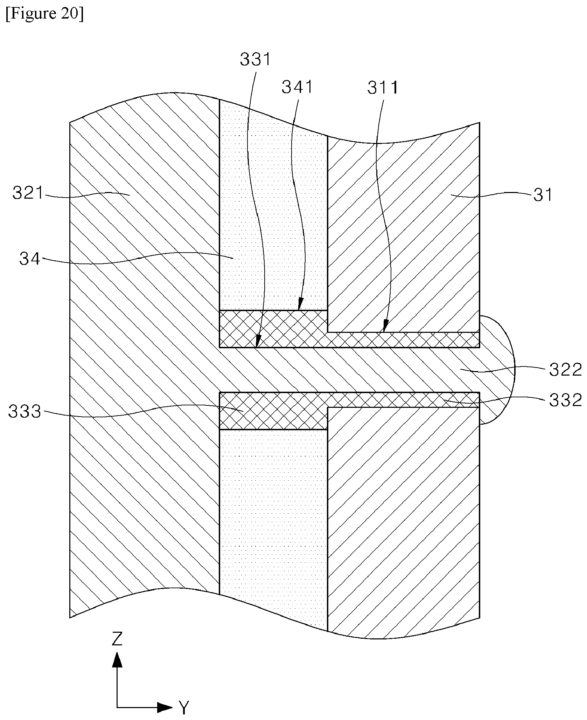

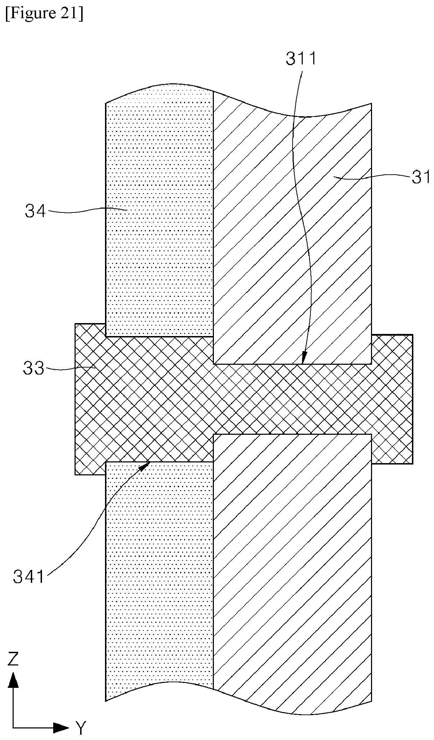

FIG. 20 is an enlarged cross-sectional view illustrating an area where a first hole of the end plate is provided according to a second modified example of the second embodiment of the present invention, and FIG. 21 is an enlarged cross-sectional view illustrating thermal runaway occurring in the area shown in FIG. 20. Referring to FIGS. 20 and 21, in the second modified example, the diameter of the third hole 341 may be larger than that of the first hole 311. Here, the thermal expansion member 33 may include the insert portion 332 and the insert interference part 333. The insert portion 332 extending in lengthwise direction of the first hole 311 may be provided in a manner that the outer circumferential surface thereof corresponds to the inner circumferential surface of the first hole 311 and the inner circumferential surface thereof corresponds to the outer circumferential surface of the fastening part 322. The insert interference part 333 extending in lengthwise direction of the third hole 341 may be provided in a manner that the outer circumferential surface thereof corresponds to the inner circumferential surface of the third hole 341 and the inner circumferential surface thereof corresponds to the outer circumferential surface of the fastening part 322. According to the second modified example, the present invention is advantageous in manufacturing since insertion depth may be limited simply by varying the diameters of the first hole 311 and the third hole 341 to be different without forming a groove.

The present invention also provides a structure of a battery module including the end plate.

FIG. 1 is a perspective view of a battery cell. Referring to FIG. 1, a pouch-type battery cell 21 built into a medium to large-sized battery module may include an electrode assembly formed by stacking a plurality of anodes and a plurality of cathodes with separators interposed therebetween, a pouch 211 accommodating and sealing the electrode assembly, and an electrode lead 212 extending from and protruding out of the pouch 211. A plurality of the battery cells 21 may be stacked to form a battery cell laminate, and the battery cell laminate may constitute a single battery module.

FIGS. 2 and 3 are perspective and exploded perspective views illustrating a structure of a battery module. Referring to FIGS. 2 and 3, a battery module M includes a battery cell laminate 2, a frame 1, a bus bar frame 4 and end plates 3. The battery cell laminate 2 may be accommodated in the frame 1 having two open lengthwise ends through which electrode leads 212 protrudes in lengthwise direction. Here, the electrode leads 212 may penetrate the slit 41 provided in the bus bar frame 1 and be welded to a bus bar 42, and the end plates 3 may cover two lengthwise ends of the frame 1 through which the bus bar frame 4 is exposed.

The present invention also provides a structure of a battery pack including the battery module and a vehicle including the battery pack.

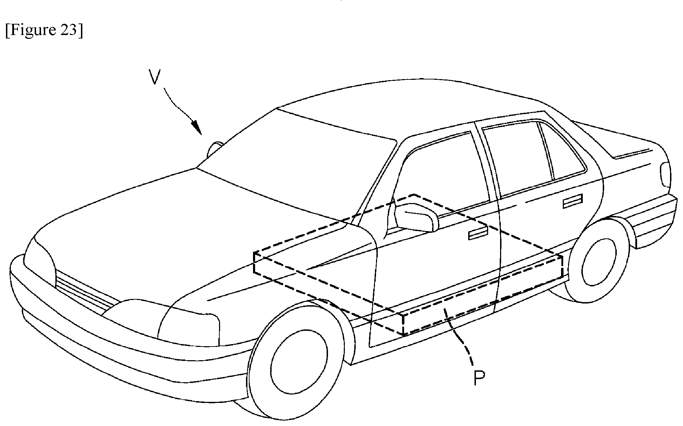

FIGS. 22 and 23 are perspective views illustrating a battery pack including a battery module and a vehicle including the battery pack, respectively. Referring to FIGS. 22 and 23, a plurality of battery modules M may be accommodated in a single frame to form a battery pack P. As described above, a plurality of the battery modules M may be arranged to face each other in lengthwise direction. The battery pack P may be mounted on an electric vehicle V and serve as a power source. The structures and manufacturing methods of these battery packs and electric vehicles are well known to those skilled in the art, and will not be described in detail herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An end plate covering a lengthwise end of a battery module, the end plate comprising:
a first plate provided with a first hole perforating therethrough in lengthwise direction;
a second plate comprising a main body and a fastening part protruding outward from the main body in lengthwise direction, the second plate provided inner than the first plate in lengthwise direction; and
a thermal expansion member comprising a thermally expandable material,
wherein the fastening part penetrates the first hole to fasten the first plate and the main body, and
the thermal expansion member expands in volume during thermal runaway of the battery module.

2. The end plate of claim 1, wherein the fastening part comprises a material melting during thermal runaway of the battery module.

3. The end plate of claim 2, wherein the fastening part comprises a welding rivet made of synthetic resin and welded after penetrating the first hole.

4. The end plate of claim 2, wherein the thermal expansion member comprises a second hole penetrated by the fastening part, and is interposed between an outer circumferential surface of the fastening part and an inner circumferential surface of the first hole.

5. The end plate of claim 4, wherein the thermal expansion member extending in lengthwise direction of the first hole is provided in a manner that an outer circumferential surface thereof corresponds to the inner circumferential surface of the first hole and an inner circumferential surface thereof corresponds to the outer circumferential surface of the fastening part.

6. The end plate of claim 4, wherein the first hole comprises a groove at a lengthwise inner end thereof, the groove having an inner diameter larger than an inner diameter of a portion of the first hole other than the lengthwise inner end thereof, and
the thermal expansion member extends in lengthwise direction of the first hole in a manner that an outer circumferential surface thereof corresponds to the inner circumferential surface of the first hole and an inner circumferential surface thereof corresponds to the outer circumferential surface of the fastening part.

7. The end plate of claim 4, wherein the first hole comprises a groove at a lengthwise inner end thereof, the groove having an inner diameter larger than an inner diameter of a portion of the first hole other than the lengthwise inner end thereof, and
the thermal expansion member comprises:
an insert portion extending in lengthwise direction of the first hole in a manner that an outer circumferential surface thereof corresponds to the inner circumferential surface of the first hole and an inner circumferential surface thereof corresponds to the outer circumferential surface of the fastening part; and
an insert interference part extending in lengthwise direction of the groove in a manner that an outer circumferential surface thereof corresponds to an inner circumferential surface of the groove and an inner circumferential surface thereof corresponds to the outer circumferential surface of the fastening part.

8. The end plate of claim 1, further comprising: a flame retardant plate provided with a third hole extending in lengthwise direction and interposed between the first plate and the second plate along lengthwise direction,
wherein the fastening part sequentially penetrates the third hole and the first hole to fasten the first plate, the flame retardant plate and the main body.

9. The end plate of claim 8, wherein the fastening part comprises a material melting during thermal runaway of the battery module.

10. The end plate of claim 9, wherein the fastening part comprises a welding rivet made of synthetic resin and welded after sequentially penetrating the first hole and the third hole.

11. The end plate of claim 9, wherein the thermal expansion member comprises a second hole penetrated by the fastening part, and is interposed between an outer circumferential surface of the fastening part and an inner circumferential surface of the third hole.

12. The end plate of claim 11, wherein an diameter of the third hole is larger than that of the first hole, and
the thermal expansion member extends in lengthwise direction of the third hole in a manner that an outer circumferential surface thereof corresponds to the inner circumferential surface of the third hole and an inner circumferential surface thereof corresponds to the outer circumferential surface of the fastening part.

13. The end plate of claim 11, wherein the thermal expansion member is further interposed between the outer circumferential surface of the fastening part and an inner circumferential surface of the first hole.

14. The end plate of claim 13, wherein an inner diameter of the first hole is equal to that of the third hole, and
the thermal expansion member extends in lengthwise direction of the first hole and the third hole in a manner that an outer circumferential surface thereof corresponds to the inner circumferential surfaces of the first hole and the third hole and an inner circumferential surface thereof corresponds to the outer circumferential surface of the fastening part.

15. The end plate of claim 13, wherein an diameter of the third hole is larger than that of the first hole, and
the thermal expansion member comprises:
an insert portion extending in lengthwise direction of the first hole in a manner that an outer circumferential surface thereof corresponds to the inner circumferential surface of the first hole and an inner circumferential surface thereof corresponds to the outer circumferential surface of the fastening part; and
an insert interference part extending in lengthwise direction of the third hole in a manner that an outer circumferential surface thereof corresponds to an inner circumferential surface of the third hole and an inner circumferential surface thereof corresponds to the outer circumferential surface of the fastening part.

16. The end plate of claim 8, wherein the flame retardant plate comprises an electrically insulating material.

17. The end plate of claim 1, wherein the thermal expansion member comprises a material selected from a group consisting of soft urethane, hard urethane, hard polyurethane and phosphorus-based flame retardant material.

18. A battery module comprising an end plate of any one of claims 1 to 17.

19. A battery pack comprising a battery module of claim 18.

20. A vehicle comprising a battery pack of claim 19.
